# EUROPÄISCHE PATENTANMELDUNG

(11) **EP 2 239 467 A2**
(43) Veröffentlichungstag der Anmeldung: **13.10.2010**
(21) Anmeldenummer: 10003105.3
(22) Anmeldetag: 24.03.2010
(51) Int. Cl.: F15B 1/02

(54) **Hydraulische Steueranordnung**

(30) Priorität: 06.04.2009 DE 102009016571
(71) Anmelder: Robert Bosch GmbH, 70469 Stuttgart (DE); AGCO GmbH, 87616 Marktoberdorf (DE)
(72) Erfinder: Jessen, Sönke, Dr., 71732 Tamm (DE); Brockmann, Andreas, 87651 Bidingen (DE)
(74) Vertreter: Thürer, Andreas

(57) **Zusammenfassung**

Offenbart ist eine hydraulische Steueranordnung für ein Hubwerk mit zumindest einem Hubzylinder, insbesondere einer mobilen Arbeitsmaschine, wobei mindestens ein Druckraum gebildet wird, der zur Beaufschlagung des Kolbens mit einem Arbeitsdruck an eine Arbeitsleitung angeschlossen ist. Diese ist mit einem Kolbenspeicher und einem weiteren Hydrospeicher zur Druckregelung des Hubzylinders verbunden, wobei der Hydrospeicher einen höheren gasseitigen Vorspanndruck als der Kolbenspeichers aufweist.

## Beschreibung

Die Erfindung betrifft eine hydraulische Steueranordnung gemäß dem Oberbegriff des Patentanspruchs 1.

In der DE 34 15 922 C2 ist eine derartige hydraulische Steueranordnung zur Ansteuerung von Hubzylindern gezeigt. Diese dienen beispielsweise dazu, bei einer mobilen Erntemaschine ein Arbeitsgerät in Form eines Erntegeräts zu heben, zu senken oder zu halten. Eine mit einer Pumpe in Druckmittelverbindung stehende Arbeitsleitung ist hierfür zur Druckmittelversorgung der Hubzylinder an diese angeschlossen.

Im Betrieb der Erntemaschine, beispielsweise bei Vorwärtsfahrt, und im Einsatz des Erntegeräts oder Erntevorsatzes kann es notwendig sein, dass das Erntegerät Bodenkontakt hat. Zur Vermeidung von zu hoher Reibung zwischen Erntegerät und einer Erdbodenoberfläche, was zu hohen mechanischen Belastungen und Beschädigungen des Erntegeräts führen kann, wird ein großer Teil der Gewichtskraft des Erntegeräts von den Hubzylindern getragen. Um bei auftretenden Unebenheiten auf der Erdbodenoberfläche das Erntegerät im Fahrteinsatz abzufedern und die Hubzylinder zu entlasten, sind ein erster an der Arbeitsleitung angeschlossener und zwei weitere mit der Arbeitsleitung verbindbare Druckspeicher vorgesehen. Der erste Druckspeicher ermöglicht dabei eine harte und der erste und die beiden zweiten Druckspeicher zusammen eine weiche Abfederung des Erntegeräts.

Nachteilig bei dieser Lösung ist das vorrichtungstechnisch aufwendig aufgebaute Speichersystem zur Abfederung des Arbeitsgeräts mit unterschiedlichen Federhärten.

Die DE 295 07 623 U1 zeigt ebenfalls eine hydraulische Steueranordnung zur Ansteuerung eines Hubzylinders, der zum Heben und Senken eines an einem Nutzfahrzeug angeordneten Anbaugerätes, beispielsweise einem Schneepflug, dient. Hierbei kann sich der Hubzylinder auf zwei parallel angeordnete Druckspeicher abstützen. Allerdings ist die Abfederung durch die Druckspeicher nachteilig nur mit einer konstanten Federhärte realisiert und eine Anpassung der Federhärte an unterschiedliche Anbaugeräte mit unterschiedlichen Gewichtskräften bzw. Lastdrücken nicht ermöglicht.

Demgegenüber liegt der Erfindung die Aufgabe zugrunde, eine hydraulische Steueranordnung zur Entlastung zumindest eines Hubzylinders zu schaffen, die an unterschiedliche Lastdrücke des Hubzylinders angepasst und mit geringem vorrichtungstechnischem Aufwand aufgebaut ist.

Diese Aufgabe wird gelöst durch eine hydraulische Steueranordnung gemäß den Merkmalen des Patentanspruchs 1.

Erfindungsgemäß hat eine hydraulische Steueranordnung für ein Hubwerk zumindest einen Hubzylinder, der als doppeltwirkender Zylinder, insbesondere als Differentialzylinder, in dem ein Kolben einen Ring- von einem Kolbenraum trennt, oder als einfachwirkender Zylinder wie Plungerzylinder oder Teleskopzylinder ausgebildet sein kann. Der Zylinder ist zur Beaufschlagung des Kolbens mit einem Arbeitsdruck an eine Arbeitsleitung angeschlossen. Des Weiteren ist die Arbeitsleitung mit einem Kolbenspeicher und einem weiteren Hydrospeicher zur Druckregelung des Hubzylinders verbunden. Der Hydrospeicher hat hierbei einen höheren Vorspanndruck als der Kolbenspeicher.

Diese Lösung hat den Vorteil, dass durch den Kolbenspeicher und dem Hydrospeicher ein Speichersystem zur Entlastung des Hubzylinders geschaffen ist, das durch die unterschiedlichen Vorspanndrücke einfach an verschiedene Lastdrücke bzw. Arbeitsdrücke des Hubzylinders angepasst ist. Übersteigt ein Lastdruck in der Arbeitsleitung den Vorspanndruck des Kolbenspeichers, so führt dies durch den robusten Aufbau des Kolbenspeichers nicht, wie beispielsweise bei einem Membran- oder Blasenspeicher, zu einer Überlastung oder einer Beschädigung des Speichers. Der Kolbenspeicher hat zusätzlich einen wesentlich geringeren Bauraum als entsprechende Membran- oder Blasenspeicher. Das Speichersystem ist somit äußerst robust, erfordert geringen vorrichtungstechnischen Aufwand bei der Herstellung und dient zur Entlastung eines weiten Lastdruckbereichs der Anordnung.

Mit Vorteil ist der weitere Hydrospeicher ein kostengünstiger Blasen- oder Membranspeicher oder ein kompakter und äußerst robuster Kolbenspeicher.

Die Arbeitsleitung ist vorzugsweise an einem Arbeitsanschluss eines stetig verstellbaren Wegeventils angeschlossen, und über das Wegeventil mit einem Pumpen- oder Tankanschluss verbindbar oder von diesen absperrbar, wodurch der Hubzylinder mit geringem Aufwand steuerbar ist.

Ein Ringraum des Hubzylinders kann mit der Arbeitsleitung und ein Kolbenraum einfach mit einem Tank verbunden sein. Der Ringraum und der Kolbenraum können auch umgekehrt angeschlossen werden, um mit dem Hubwerk zu drücken.

Vorteilhafterweise ist der Hubzylinder des Hubwerks mit typischen Funktionen, wie Heben, Senken oder Halten eines Arbeitsgeräts einsetzbar. Der Kolben- und Hydrospeicher dienen dann, beispielsweise bei Druckschwankung durch Bodenunebenheiten im Fahrteinsatz des Arbeitsgeräts, zur Entlastung des Hubwerks.

In weiterer Ausgestaltung der Erfindung ist ein elektromagnetisch betätigbarer Ventilschieber des Wegeventils über zwei Federn in einer Umlaufstellung zentriert, in der der Pumpenanschluss mit dem Tankanschluss verbunden ist, und die Arbeitsleitung gesperrt ist. Bei einer Verschiebung des Ventilschiebers in Richtung von ersten Positionen des Wegeventils ist der Pumpenanschluss dann mit der Arbeitsleitung zum Heben des Arbeitsgeräts und bei der Verschiebung in Richtung von zweiten Positionen ist die Arbeitsleitung mit dem Tankanschluss zum Entlasten des Hubwerks verbunden. Hierdurch ist eine einfache Ansteuerung des Hubzylinders geschaffen.

Der Hubzylinder ist über eine Kolbenstange zumindest an einem an der Arbeitsmaschine drehbar gelagerten Unterlenker drehbar fixiert und über ein Gelenklager an der Arbeitsmaschine befestigt. Das Arbeitsgerät ist mit einem an der Arbeitsmaschine gelagerten Oberlenker und dem Unterlenker jeweils drehbar verbunden und kann somit durch den Hubzylinder bewegt werden.

Es hat sich als vorteilhaft im Einsatz der hydraulischen Anordnung gezeigt, wenn der Vorspanndruck des Kolbenspeichers etwa 10 % eines maximalen Lastdrucks in der Arbeitsleitung und der Vorspanndruck des Hydrospeichers etwa 30 % des maximalen Lastdrucks betragen.

Um die Position des Arbeitsgeräts vorteilhafterweise zu regeln, sind ein Drucksensor zum Messen des aktuellen Lastdrucks in der Arbeitsleitung und ein Lagesensor zum Messen der aktuellen Position des Hubwerks vorgesehen und über jeweils eine elektrische Signalleitung mit einem Leitrechner verbunden. Der Leitrechner kann dann über elektrische Steuerleitungen das Wegeventil zur Regelung des Hubwerks betätigen. Zusätzlich ist an dem Leitrechner eine Bedienkonsole angeschlossen, womit ein Bediener Einfluss auf die Ansteuerung des Hubwerks nehmen kann.

Bevorzugterweise ist die Arbeitsmaschine selbstfahrend und das Hubwerk mit dem Arbeitsgerät ist in Fahrtrichtung bei Vorwärtsfahrt vorne vorgesehen. Grundsätzlich kann das Hubwerk mit dem Arbeitsgerät auch hinten vorgesehen sein.

Die mobile Arbeitsmaschine kann insbesondere ein Traktor, ein Mähdrescher oder ein Feldhäcksler und das Arbeitsgerät ein Mähwerk, ein Schneepflug oder ein Erntevorsatz sein.

Sonstige vorteilhafte Weiterbildungen der Erfindung sind Gegenstand weiterer Unteransprüche.

Im Folgenden wird ein bevorzugtes Ausführungsbeispiel einer Erfindung anhand einer einzigen schematischen Zeichnung näher erläutert. Diese zeigt eine hydraulische Steueranordnung in einer Arbeitsmaschine gemäß einem Ausführungsbeispiel.

### Beschreibung des Ausführungsbeispiels

In der einzigen Figur ist eine mobile Arbeitsmaschine 1 in Form eines Traktors mit einer hydraulischen Anordnung 2 gemäß einem Ausführungsbeispiel offenbart. Die hydraulische Steueranordnung 2 dient zur Steuerung eines Hubwerks 4, an dem ein Arbeitsgerät 6, beispielsweise ein Kreiselmähwerk, befestigt ist. Das Hubwerk 4 ist in der Figur als ein Fronthubwerk ausgebildet, das in Fahrtrichtung bei Vorwärtsfahrt vorne an der Arbeitsmaschine 1 vorgesehen ist.

Beim vollständigen Aufliegen des Arbeitsgeräts 6 auf einer Erdbodenoberfläche im Fahrteinsatz der Arbeitsmaschine 1, können erhebliche Reibungswiderstände zwischen dem Arbeitsgerät 6 und der Erdbodenoberfläche auftreten, was zu hohen mechanischen Belastungen und Beschädigungen des Arbeitsgeräts 6, der Arbeitsmaschine 1 und der Erdbodenoberfläche führen kann. Zusätzliche mechanische Belastungen können Stoßkräfte sein, die durch Überfahren von Unebenheiten der Erdbodenoberfläche mit dem Arbeitsgerät 6 auftreten. Um die auf das Arbeitsgerät 6 und die Arbeitsmaschine 1 im Fahrteinsatz wirkenden Belastungen zu senken, wird ein Teil oder die gesamte Gewichtskraft des Arbeitsgeräts 6 von dem Hubwerk 4 aufgenommen. Beispielsweise bei einem Einsatz eines Schneepfluges als Arbeitsgerät 6 ist es vorteilhaft, wenn dieser nur mit einem Teil seiner Gewichtskraft auf der Erdbodenoberfläche abgestützt ist, wodurch ein hoher Verschleiß von Gleitkufen des Schneepfluges vermieden wird. Bei einer an der Vorderachse gelenkten Arbeitsmaschine 1 können sich zusätzlich auch die Lenkfähigkeit und die Spurführung der Arbeitsmaschine 1 verbessern, wenn die Gewichtskraft des Anbaugeräts 6 von der Arbeitsmaschine 1 aufgenommen ist. Im Folgenden wird die hydraulische Steueranordnung 2 zur Steuerung des Hubwerks 4 zum Heben, Senken und Halten des Arbeitsgeräts 6 genauer erläutert.

Die hydraulische Steueranordnung 2 aus der Figur ist über eine an einem Tank T angeschlossene hydraulische Pumpe 8 mit Druckmittel versorgt. Über eine Pumpenleitung 10 ist die Pumpe 8 an einen Pumpenanschluss P eines stetig verstellbaren 3-Wegeventils 12 angeschlossen, das in eine Grundposition a vorgespannt ist und in zwei Richtung b, c verstellbar ist. Dieses hat neben dem Pumpenanschluss P einen mit dem Tank T verbundenen Tankanschluss TA und einen Arbeitsanschluss A. An letzteren ist eine mit einem Hubzylinder 14 des Hubwerks 4 verbundene Arbeitsleitung 16 angeschlossen. Der Hubzylinder 14 dient zu Heben, Senken und Halten des Arbeitsgeräts 6 über das Hubwerk 4. In der Figur ist nur ein Hubzylinder 14 gezeigt, allerdings sind auch mehrere, beispielsweise zwei, Hubzylinder 14 parallel an dem Hubwerk 4 anord- und steuerbar. Der Einfachheit halber wird im Folgenden die hydraulischen Anordnung 2 mit einem Hubzylinder 14 beschrieben.

Ein Kolben 18 des Hubzylinders 14 trennt einen Ring- von einem Kolbenraum 20, 22. Der Ringraum 20 ist dabei mit der Arbeitsleitung 16 in Druckmittelverbindung und der Kolbenraum 22 ist zu dem Tank T entlastet. Über ein Gelenklager 24 ist der Hubzylinder 14 mit der Arbeitsmaschine 1 verbunden und mit einer den Ringraum 20 durchsetzenden Kolbenstange 26 an einem Unterlenker 28 des Hubwerks 4 drehbar befestigt. Neben dem Unterlenker 28 ist ein weiterer entsprechend ausgebildeter Unterlenker vorgesehen, der dann mit einem weiteren Hubzylinder verbunden ist. Der Unterlenker 28 ist mit einem Endabschnitt 30 gelenkig an der Arbeitsmaschine 1 gehaltert und hat an einen weiteren Endabschnitt 32 mit einem Koppelpunkt 34 zur Ankopplung des Arbeitsgeräts 6. Zusätzlich ist das Arbeitsgerät 6 weiter an einem Koppelpunkt 35 eines Oberlenkers 36 drehbar fixiert, der wiederum an der Arbeitsmaschine 1 drehbar befestigt ist. Die Ansteuerung des Hubzylinders 14 erfolgt über das Wegeventil 12.

Ein Ventilschieber des Wegeventils 12 ist elektromagnetisch mit zwei Hubmagneten 38, 40 betätigbar und über zwei Federn 42, 44 in einer Umlaufstellung a zentriert. In dieser ist der Pumpenanschluss P mit dem Tankanschluss TA verbunden und die Arbeitsleitung 16 gesperrt. Bei einer Verschiebung des Ventilschiebers in der Figur nach rechts wird das Wegeventil 12 in die mit b gekennzeichneten Positionen verschoben, bei denen der Pumpenanschluss P mit dem Arbeitsanschluss A und somit mit der Arbeitsleitung 16 in Druckmittelverbindung ist. In diesen Positionen b ist der Kolben 18 des Hubzylinders 14 über den mit der Arbeitsleitung 16 verbundenen Ringraum 20 mit Druckmittel von der Pumpe 8 beaufschlagbar, was zu einem Heben des Arbeitsgeräts 6 führt. Bei einem Verschieben des Ventilschiebers von der Umlaufstellung a nach links in der Figur in die mit c gekennzeichneten Positionen, wird der Ringraum 20 des Hubzylinders 14 über die Arbeitsleitung 16 mit dem Tankanschluss TA verbunden und somit zum Tank T entlastet, und der Pumpenanschluss P gesperrt. Die Positionen c dienen dann zum Entlasten des Ringraums 20, wodurch das Arbeitsgerät 6 abgesenkt wird. Bei Verschieben des Ventilschiebers in die Richtung der Positionen b und c des Wegeventils 12 von jeweils der Umlaufstellung a aus, wird jeweils eine Messblende in den Positionen b bzw. c immer weiter aufgesteuert. Angesteuert werden die Hubmagneten 38 und 40 des Wegeventils 12 zum Verschieben des Ventilschiebers von einem Leitrechner 45 über elektrische Steuerleitungen 46 bzw. 48.

Ein Drucksensor 50 misst den Lastdruck in der Arbeitsleitung 16 und ist über eine elektrische Signalleitung 52 mit dem Leitrechner 45 verbunden. Ein Winkelsensor 54 ist über ein nicht dargestelltes Gestänge mit dem Unterlenker 28 mechanisch verbunden und misst die aktuelle Position des Unterlenkers 28. Über eine elektrische Signalleitung 56 ist der Winkelsensor 54 dann ebenfalls mit dem Leitrechner 45 in Verbindung. Des Weiteren ist eine Bedienkonsole 58 über eine elektrische Steuerleitung 60 an den Leitrechner 45 angeschlossen. Über die Bedienkonsole 58 kann ein Benutzer unterschiedlichste Funktionen des Hubwerks 4 steuern. Zum Funktionsumfang gehören dabei das Halten, Heben und Senken des Arbeitsgerätes 6 bzw. Anbaugerätes. Über weitere Bedien- und Anzeigeelemente der Bedienkonsole 58 sind beispielsweise die Hebe- und Senkgeschwindigkeiten des Arbeitsgeräts 6 unabhängig voneinander vorwählbar und es kann die maximale Hubhöhe durch eine Lagerregelung des Hubwerks 4 geregelt werden. Bei einer weiteren Funktion ist zur Erleichterung der Bedienung beispielsweise ein automatisches Umschalten zwischen Senken und Halten des Arbeitsgeräts 6 bei Erreichen einer bestimmten Position des Hubwerks 4 ermöglicht.

Bodenunebenheiten im Fahrteinsatz des Arbeitsgeräts 6, wie Eingangs beschrieben, führen zu mechanischen Belastungen des Arbeitsgeräts 6. Um diese Belastungen zu senken oder zu vermeiden wird das Arbeitsgerät 6 und das Hubwerk abgefedert. Aus dem Stand der Technik ist hierfür ein System bekannt, dass einen Drucksensor aufweist, der den aktuellen Lastdruck zum Haltern des Arbeitsgeräts misst und diesen mit einem Solldruck vergleicht. Ist der Lastdruck dann höher wie der Solldruck, beispielsweise beim Überfahren einer Bodensenke, so wird das Arbeitsgerät gesenkt, womit das Hubwerk entlastet ist. Bei einem geringeren Lastdruck als der Solldruck, beispielsweise beim Überfahren eines Hügels, wird das Arbeitsgerät durch das Hubwerk angehoben. Somit werden durch Bodenunebenheiten hervorgerufene Störgrößen ausgeregelt, um den Auflagedruck des Arbeitsgeräts auf die Erdbodenoberfläche konstant zu halten. Zur Regelung ist in dem vorgehend beschriebenen Stand der Technik ein Wegeventil vorgesehen, das den Hubzylinder des Hubwerks mit einer Pumpe oder einem Tank verbindet oder sperrt. Das Wegeventil weist allerdings eine endliche, begrenzte Stellgeschwindigkeit zur Ausregelung der Störgrößen auf. Die Frequenz der Störgrößen kann allerdings derart hoch sein, dass diese durch das Wegeventil nicht mehr regelbar sind. Bei der erfindungsgemäßen Ausführung der hydraulischen Anordnung 2 aus der Figur sind zur Regelung unterschiedlichster Störgrößen parallel angeordnete Hydrospeicher 62, 64 vorgesehen, was im Folgenden erläutert ist.

Der in der Figur linke Hydrospeicher 62 ist ein Kolbenspeicher 62, der über eine erste Speicherleitung 66 mit der Arbeitsleitung 16 verbunden ist. Der rechte Hydrospeicher 64 ist ein Membranspeicher 64, der mit einer zweiten Speicherleitung 68 an die Arbeitsleitung 16 angeschlossen ist. Die Hydrospeicher 62, 64 haben die Aufgabe Lastdruckschwankungen in der Arbeitsleitung 16 auszugleichen und somit den Hubzylinder 14 und das Hubwerk 4 zu entlasten. Lastdruckschwankungen können beispielsweise wie vorstehend beschrieben durch Bodenunebenheiten im Fahrteinsatz der Arbeitsmaschine 1 mit dem Arbeitsgerät 6 auftreten.

Damit die Hydrospeicher 62, 64 für unterschiedlichste Arbeitsgeräte 6 und somit unterschiedlichste Lastdruckbereiche einsetzbar sind, weisen die Hydrospeicher 62, 64 verschiedene Vorspanndrücke auf. Der Vorspanndruck des Kolbenspeichers 62 ist dabei geringer als der des Membranspeichers 64. Hier greift dann der große Vorteil, dass der Kolbenspeichers 62 bei einem Lastdruck, der höher als sein Vorspanndruck ist und beispielsweise dem Vorspanndruck des Membranspeichers 64 entspricht, aufgrund seiner Bauweise nicht überlastet werden kann. Ein anstelle des Kolbenspeichers 62 eingesetzter Blasen- oder Membranspeicher würde dagegen bei einer Überlastung beschädigt werden. Der Kolbenspeicher 64 ist dann bei niedrigen Lastdrücken und der Membranspeicher 62 bei hohen Lastdrücken zur Entlastung des Hubwerks 4 vorgesehen. Mit dem Kolbenspeicher 62 und dem Hydrospeicher 64 ist ein Speichersystem zur Druckregelung geschaffen, welches ohne eine spezielle Abstimmung durch den Bediener des Arbeitsmaschine 1 für unterschiedliche Arbeitsgeräte 6 und verschiedene Einsatzbedingungen der Arbeitsmaschine 1, wie Straßenfahrt oder Feldeinsatz, verwendbar ist.

Die Abstimmung der Vorspanndrücke der Hydrospeicher 62, 64 ist vorzugsweise bei der Herstellung der Arbeitsmaschine 1 werksseitig konfigurierbar. Als vorteilhaft haben sich folgende Vorspanndrücke gezeigt. Der Vorspanndruck des Kolbenspeichers 62 entspricht etwa 10% des maximalen Lastdrucks der Arbeitsmaschine 1 und der Vorspanndruck des Membranspeichers 64 etwa 30% des maximalen Lastdrucks.

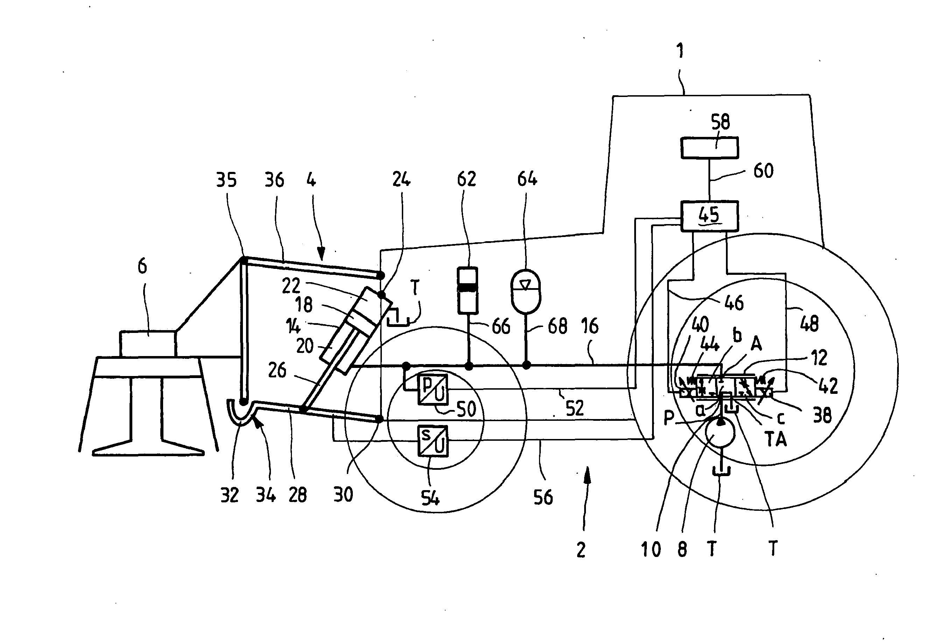

Ein weiterer Vorteil des Speichersystems aus der Figur liegt darin, dass beide Hydrospeicher 62, 64, wie bereits beschrieben, für den gesamten Lastdruckbereich der hydraulischen Anordnung 2 in Druckmittelverbindung mit der Arbeitsleitung 16 stehen können. Schaltventile zum Trennen eines jeweiligen Hydrospeichers 62, 64 von der Arbeitsleitung 16, die bei Membran- oder Blasenspeichern mit unterschiedlichen Vorspanndrücken zur Vermeidung von Überlastungen und Beschädigungen der Speicher notwendig wären, sind durch das Speichersystem aus Figur 1 obsolet. Hierdurch ist der vorrichtungstechnische Aufwand der hydraulischen Anordnung 1 sehr gering, wodurch Herstellungskosten gespart werden. Außerdem ist der Kolbenspeicher 62 kompakter als ein entsprechender Membran- oder Blasenspeicher, wodurch Bauraum gespart werden kann.

Alternativ ist denkbar, dass der in der Figur rechte Hydrospeicher 64 mit dem höheren Vorspanndruck ein Blasen- oder Kolbenspeicher ist.

Die hydraulische Steueranordnung 1 ist für unterschiedlichste Arbeitsmaschinen 1, wie beispielsweise Traktoren, Mähdrescher, Feldhäcksler, Unimog, LKW usw. einsetzbar und eignet sich für die verschiedensten Arbeitsgeräte 6, insbesondere landwirtschaftliche Geräte, die an das Hubwerk 4 anbringbar sind. Das Hubwerk 4 kann dabei ein Front- oder Heckhubwerk sein.

Alternativ kann für das Wegeventil 12 ein Load-Sensing-Ventil eingesetzt werden.

Offenbart ist eine hydraulische Steueranordnung für ein Hubwerk mit zumindest einem einfachwirkenden oder doppeltwirkenden Hubzylinder, insbesondere einer mobilen Arbeitsmaschine, wobei mindestens ein Druckraum gebildet wird, der zur Beaufschlagung des Kolbens des Hubzylinders mit einem Arbeitsdruck an eine Arbeitsleitung angeschlossen ist. Diese ist mit einem Kolbenspeicher und einem weiteren Hydrospeicher zur Druckregelung des Hubzylinders verbunden, wobei der Hydrospeicher einen höheren gasseitigen Vorspanndruck als der Kolbenspeicher aufweist.

## Patentansprüche

1. Hydraulische Steueranordnung für ein Hubwerk (4) mit zumindest einem einfachwirkenden oder doppeltwirkenden Hubzylinder (14), insbesondere einer mobilen Arbeitsmaschine (1), wobei der Hubzylinder (14) mindestens einen Druckraum (20) bildet und dieser Druckraum (20) zur Beaufschlagung eines Kolbens (18) des Hubzylinders (14) mit einem Arbeitsdruck an eine Arbeitsleitung (16) angeschlossen ist, **dadurch gekennzeichnet, dass** die Arbeitsleitung (16) mit einem Kolbenspeicher (62) und einem weiteren Hydrospeicher (64) zur Druckregelung des Hubzylinders (14) verbunden ist und der Hydrospeicher (64) einen höheren Vorspanndruck als der Kolbenspeicher (62) aufweist.

2. Hydraulische Steueranordnung nach Anspruch 1, wobei der Hydrospeicher (64) ein Blasen-, Membran- oder Kolbenspeicher ist.

3. Hydraulische Steueranordnung nach Anspruch 1 oder 2, wobei die Arbeitsleitung (16) an einen Arbeitsanschluss (A) eines stetig verstellbaren Wegeventils (12) angeschlossen ist, und über das Wegeventil (12) mit einem Pumpen- oder Tankanschluss (P, AT) verbindbar oder von diesen absperrbar ist.

4. Hydraulische Steueranordnung nach einem der Ansprüche 1 bis 3, wobei der Kolben (18) des Hubzylinders (14) einen Ring- von einem Kolbenraum (20, 22) trennt und der Ringraum (20) des Hubzylinders (12) mit der Arbeitsleitung (16) und der Kolbenraum (22) mit einem Tank (T) verbunden sind.

5. Hydraulische Steueranordnung nach einem der Ansprüche 1 bis 4, wobei der Hubzylinder (14) des Hubwerks (4) zum Heben, Senken oder Halten eines Arbeitsgeräts (6) und der Kolben- und Hydrospeicher (62, 64) zur Entlastung des Hubzylinders (14) vorgesehen sind.

6. Hydraulische Steueranordnung nach einem der Ansprüche 3 bis 5, wobei ein elektromagnetisch betätigbarer Ventilschieber des Wegeventils (12) über zwei Federn (42, 44) in einer Umlaufstellung (a) zentriert ist, in der der Pumpenanschluss (P) mit dem Tankanschluss (TA) verbunden ist, und die Arbeitsleitung (16) gesperrt ist, und wobei ein Verschieben des Ventilschieber in Richtung von ersten Positionen (b) des Wegeventils (12) der Pumpenanschluss (P) mit der Arbeitsleitung (16) zum Heben des Arbeitsgeräts (6) und ein Verschieben in Richtung von zweiten Positionen (c) des Wegeventils (12) die Arbeitsleitung (16) mit dem Tankanschluss (TA) zum Entlasten des Hubwerks (4) verbunden ist.

7. Hydraulische Steueranordnung nach Anspruch 5 oder 6, wobei der Hubzylinder (14) über eine Kolbenstange (26) an einem an der Arbeitsmaschine (1) drehbar gelagerten Unterlenker (28) drehbar fixiert ist und über ein Gelenklager (24) an der Arbeitsmaschine (1) befestigt ist, und wobei das Arbeitsgerät (6) mit einem an der Arbeitsmaschine (1) gelagerten Oberlenker (36) und dem Unterlenker (28) jeweils drehbar verbunden ist.

8. Hydraulische Steueranordnung nach einem der vorhergehenden Ansprüche, wobei ein Vorspanndruck des Kolbenspeichers (62) etwa 10 % eines maximalen Lastdrucks in der Arbeitsleitung (16) und ein Vorspanndruck des Hydrospeichers (64) etwa 30 % des maximalen Lastdrucks betragen.

9. Hydraulische Steueranordnung nach einem der vorhergehenden Ansprüche, wobei ein Drucksensor (50) zum Messen des aktuellen Lastdruck in der Arbeitsleitung (16) und ein Lagesensor (54) zum Messen der aktuellen Position des Hubwerks (4) vorgesehen sind und über jeweils eine elektrische Signalleitung (52, 56) mit einem Leitrechner (45) verbunden sind.

10. Hydraulische Steueranordnung nach Anspruch 9, wobei der Leitrechner (45) über elektrische Steuerleitungen (46, 48) das Wegeventil (12) ansteuert, und wobei eine Bedienkonsole (58) an den Leitrechner (45) angeschlossen ist.

11. Hydraulische Steueranordnung nach einem der vorhergehenden Ansprüche, wobei die Arbeitsmaschine (1) selbstfahrend ist und das Hubwerk (4) mit dem Arbeitsgerät (6) in Fahrtrichtung bei Vorwärtsfahrt vorne vorgesehen ist.

12. Hydraulische Steueranordnung nach einem der vorhergehenden Ansprüche, wobei die mobile Arbeitsmaschine (1) ein Traktor, ein Mähdrescher, ein Feldhäcksler, ein Unimog oder ein LKW und das Arbeitsgerät (6) ein Mähwerk, ein Schneepflug oder ein Erntevorsatz ist.
